# EUROPEAN PATENT APPLICATION

(11) **EP 1 521 259 A1**
(43) Date of publication of application: **06.04.2005**
(21) Application number: 03725772.2
(22) Date of filing: 12.05.2003
(51) Int. Cl.: G11B 20/00, G11B 20/10, H04N 5/76, H04N 5/91

(54) **INFORMATION RECORDING DEVICE AND INFORMATION RECORDING METHOD**

(30) Priority: 17.05.2002 JP 2002142642
(71) Applicant: MATSUSHITA ELECTRIC INDUSTRIAL CO., LTD., Kadoma-shi, Osaka 571-8501 (JP)
(72) Inventor: YANAGIDA, Atsushi, Hirakata-shi, Osaka 573-1111 (JP)
(74) Representative: Balsters, Robert
(86) International application number: PCT/JP2003/005874
(87) International publication number: WO 2003/098623

(57) **Abstract**

The invention presents an information recording apparatus and an information recording method capable of recording video or other signal being seen on a television receiver by a simple operation, and also preventing user's operation error. The information recording apparatus comprises , a second input and output unit connected to a first input and output unit, an analog input terminal connected to an analog output terminal, an information acquiring unit for acquiring the selection state of a first selector by transmitting a command to an information output unit, and a recorder for recording by selecting the output of the second input and output unit or analog input terminal, same as the selection state, by a second selector.

## Description

### TECHNICAL FIELD

The present invention relates to an information recording apparatus and an information recording method for recording video and other signals from a television receiver or the like connected via a plurality of interfaces.

### BACKGROUND ART

Recently, intensive researches have been concentrated on development of television receiver, recording apparatus and other AV related apparatuses mounting the interface conforming to IEEE1394 standard, and a system for data communications by mutually connecting these apparatuses. It is because this interface has the following advantages. That is, as compared with the analog interface, data deterioration during communication is extremely less, up to 63 sets can be connected, and connected apparatuses can communicate with each other directly.

By these apparatuses and the system, the users can mutually utilize the data controlled in the individual apparatuses by the own apparatuses, and the convenience for the users is greatly enhanced.

On the other hand, this system is not always good for the users. Since the mutual connection among apparatuses is very complicated, it is difficult for the users to understand their connection state, and establish connection with a desired apparatus and use freely.

For instance, in the case of multiple apparatuses connected to the VTR or television receiver, suppose to record a certain program signal of television broadcast being displayed on a monitor of a television receiver by using a VTR. In this case, the greater the number of apparatuses being connected, the more difficult it is for the user to understand the connection state. It is hence difficult for the user to set up the route immediately for input of program signal from the television receiver to the VTR. As a result, if the user wishes to record the program signal of the television broadcast being displayed on the monitor of the television receiver by the VTR, recording may not be started immediately.

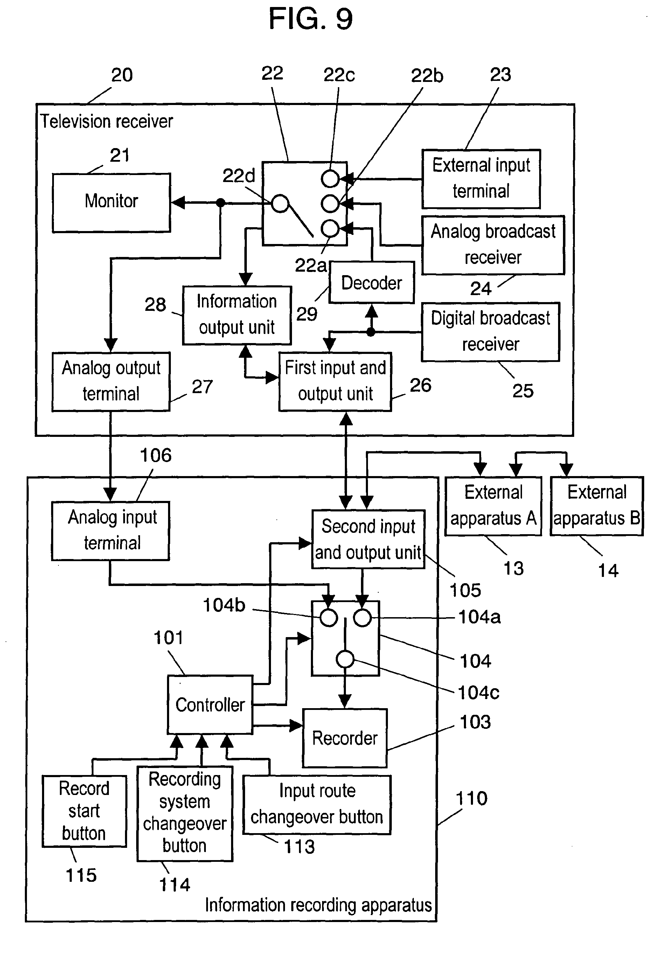

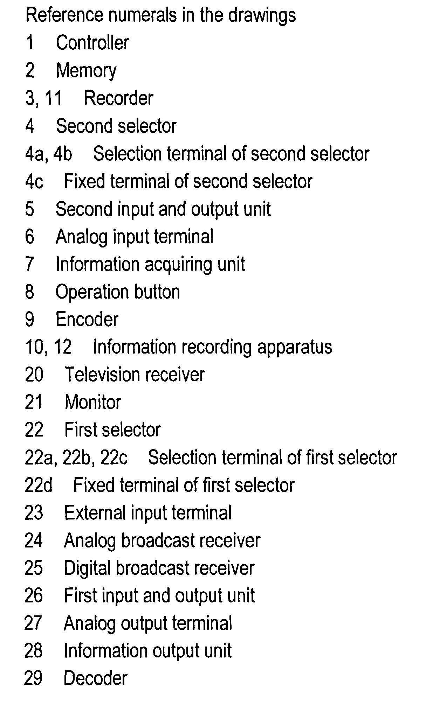

A conventional information recording apparatus is explained by referring to Fig. 9.

Fig. 9 is a block diagram showing the structure of a conventional information recording apparatus, the structure of a television receiver connected to the conventional information recording apparatus, and the connection state of the conventional information recording apparatus and an external apparatus.

In Fig. 9, a television receiver 20 comprises a monitor 21, a first selector 22, an external input terminal 23, an analog broadcast receiver 24, a digital broadcast receiver 25, a first input and output unit 26, an analog output terminal 27, an information output unit 28, and a decoder 29.

The external input terminal 23 receives an analog signal from an external apparatus, and sends to the first selector 22. The analog broadcast receiver 24 is composed of a tuner and others, and selects a broadcasting channel, obtains an analog broadcast signal, and sends to the first selector 22. The digital broadcast receiver 25 is composed of a tuner and others, and selects a broadcasting channel, obtains a digital broadcast signal, and sends to the decoder 29 and first input and output unit 26. The decoder 29 converts the input digital broadcast signal into an analog signal so as to be displayed on the monitor 21. The first selector 22 selects input signals, and sends either signal to the monitor 21 and analog output terminal 27. The first selector 22 includes selection terminals 22a, 22b, 22c, and a fixed terminal 22d. The monitor 21 displays the input signal from the first selector 22, and presents to the user. The first input and output unit 26 composes a part of the interface conforming to IEEE1394 standard, and the analog output terminal 27 is an analog signal terminal such as composite terminal or S video terminal for sending the output analog broadcast signal from the first selector 22 to an external apparatus. The information output unit 28, when receiving a connect status command conforming to IEEE1394 standard, acquires the connect status from the first selector 22, that is, the selection state of the first selector 22, and sends a connect status response conforming to IEEE1394 to the first input and output unit 26.

An external apparatus A 13 and an external apparatus B 14 are VTR or other external apparatuses for transmitting and receiving video signals and other digital signals, mounting the interface conforming to IEEE1394 standard.

An information recording apparatus 110 comprises a controller 101, a recorder 103, a second selector 104, a second input and output unit 105, an analog input terminal 106, an input route changeover button 113, a recording system changeover button 114, and a record start button 115.

The input route changeover button 113, recording system changeover button 114, and record start button 115 respectively transmits an input route specifying signal, a recording system specifying signal, and a record start signal to the controller 101 by the user's manipulation. The controller 101 is composed of microcomputer and others having a function of controlling the second selector 104 and second input and output unit 105 according to the received input route specifying signal, a function of controlling the recorder 103 according to the received recording system specifying signal, and a function of transmitting the received record start signal to the recorder 103. The recorder 103 is a recording unit of D-VHS (registered trademark) or the like. The recorder 103 has a function of setting to record in digital system when receiving a recording system specifying method designating recording by digital system from the controller 101, or setting to record in analog system when receiving a recording system specifying method designating recording by analog system, and a function of recording the digital broadcast signal or analog broadcast signal received from the second selector 104. The second selector 104 selects either the analog broadcast signal from the analog input terminal 106 or the digital broadcast signal from the second input and output unit 105 by the control from the controller 101, and sends either signal to the recorder 103. The second selector 104 includes selection terminals 104a and 104b, and a fixed terminal 104c. The second input and output terminal 105 composes a part of the interface conforming to IEEE1394 standard, and communicates with an external apparatus, sends the input digital broadcast signal to the second selector 104. The analog input terminal 106 is an analog signal terminal such as composite terminal or S video terminal, and receives an analog broadcast signal from the external apparatus, and sends to the second selector 104.

The television receiver 20, information recording apparatus 110, external apparatus A 13 and external apparatus B 14 are mutually connected via the digital interface conforming to IEEE1394 standard, and the connection between the information recording apparatus 110 and television receiver 20 is assured by the connection between the second input and output unit 105 and first input and output unit 26. When the second input and output unit 105 communicates with any one of the television receiver 20, external apparatus A 13 and external apparatus B 14, information necessary for communication is acquired from the controller 101, and connection with the desired apparatus is established, and then communication is enabled. The analog output terminal 27 and analog input terminal 106 are connected, and the information recording apparatus 110 can receive an analog broadcast signal from the television receiver 20.

In the information recording apparatus having such structure, the operation is explained, by referring to Fig. 9, in the case of recording the signal being seen by the user on the monitor 21, or the signal before analog conversion of the same signal, in the recorder 103.

First, supposing the user is viewing a digital broadcast on the monitor 21, when the user wishes to start its recording in the recorder 103, the operation is as follows. In this case, specifically, the digital broadcast signal selected by the digital broadcast receiver 25 is supplied into the decoder 29 by connecting between the fixed terminal 22d and selection terminal 22a of the first selector 22, and the signal decoded into an analog signal by the decoder 29 is displayed on the monitor 21.

In the first place, the user must understand by a proper method that the output signal on the monitor 21 is an analog signal decoded by the decoder 29 from the digital broadcasts signal selected by the digital broadcast receiver 25, and that this digital broadcast signal is obtained from the first input and output unit 26. Next, the user manipulates the input route button 113 to transmit an input route specifying signal for receiving the digital broadcast signal from the first input and output unit 26 to the controller 101, and then the controller 101 controls the second input and output unit 105 to establish connection with the first input and output unit 26, and controls the second selector 104 to establish connection between the selection terminal 104a and fixed terminal 104c. Further, the user manipulates the recording system changeover button 114 to transmit a recording system specifying signal for designating to record in digital system to the controller 101. As a result, the controller 101 controls the recorder 103 to set so as to record in digital system. Then, the user manipulates the record start button 115 to transmit a record start signal to the controller 101, and the controller 101 transmits a record start signal to the recorder 103, so that the recorder 103 starts to record.

In a next case, supposing the user is viewing an analog broadcast on the monitor 21, that is, when the analog broadcast signal selected by the analog broadcast receiver 24 is displayed on the monitor 21 by connecting the fixed terminal 22d and selection terminal 22b of the first selector 22, if the user wishes to start its recording in the recorder 103, the operation is as follows.

In the first place, similarly, the user must understand by a proper method that the output signal on the monitor 21 is an analog broadcast signal selected by the analog broadcast receiver 24, and that this analog broadcast signal is obtained from the analog output terminal 27. Next, the user manipulates the input route button 113 to transmit an input route specifying signal for receiving the analog broadcast signal from the analog output terminal 27 to the controller 101. The controller 101 controls the second selector 104 to connect between the selection terminal 104b and fixed terminal 104c. Further, the user manipulates the recording system changeover button 114 to transmit a recording system specifying signal for designating to record in analog system to the controller 101, and the controller 101 controls the recorder 103 to set so as to record in analog system. Then, the user manipulates the record start button 115 to transmit a record start signal to the controller 101, and the controller 101 transmits a record start signal to the recorder 103, so that the recorder 103 starts to record.

By this operation, the user knows the origin of the output signal to the monitor 21, that is, understands the selection state of the first selector 22, and manipulates the input route changeover button 113, recording system changeover button 114, and record start button 115 in this sequence, and starts recording by specifying the input route and recording system. Thus, the video signal seen on the television receiver 20 can be recorded in the information recording apparatus 110.

In the conventional constitution, however, in order to record the signal viewed in the television receiver 20 in the information recording apparatus 110, the user must know where the output signal in the monitor 21 is from, and manipulate the input route changeover button 113, recording system changeover button 114, and record start button 115 in this sequence to specify the input route and recording system, and start recording, and hence the operability is poor.

Or if the user makes a mistake, a signal not intended by the user may be recorded in the information recording apparatus 110, and in this respect, too, the operability is poor. For example, while receiving an analog broadcast in the television receiver 20 and seeing on the monitor 21, if the user wishes to record this analog broadcast in analog broadcast signal, but sets the input route to record the digital broadcast signal from the first input and output unit 26 by mistake, the analog broadcast intended by the user is not recorded, but the digital broadcast is recorded. To the contrary, while receiving a digital broadcast in the television receiver 20, if the user wishes to record the digital broadcast signal of this digital broadcast, but sets the input route to record the analog broadcast signal from the analog output terminal 27 by mistake, the analog converted signal of the digital broadcast signal is received and recorded in the information recording apparatus 110 in analog system.

### DISCLOSURE OF THE INVENTION

The information recording apparatus of the invention is an information recording apparatus for recording at least either digital broadcast signal or analog broadcast signal, as being connected to a television receiver including a first selector for selecting either digital broadcast signal or analog broadcast signal, and sending to a monitor, an information output unit detecting which signal is selected by the first selector, a first input unit for issuing the detection result of the information output unit and digital broadcast signal, and an analog output terminal for issuing analog broadcast signal, comprising:
a second input and output unit connected to the first input and output unit;
an analog input terminal connected to the analog output terminal;
an information acquiring unit for acquiring the result of detection by the information output unit;
a second selector for selecting either digital broadcast signal or analog broadcast signal;
a recorder for recording the signal selected by the second selector in either digital system or analog system; and
a controller for
   controlling the second selector to select the digital broadcast signal and record in the recorder in digital system when the detection result of the information output unit acquired by the information acquiring unit is the information showing selection of digital broadcast signal, or
   controlling the second selector to select the analog broadcast signal and record in the recorder in analog system when the detection result of the information output unit acquired by the information acquiring unit is the information showing selection of analog broadcast signal.

The information recording method of the invention is an information recording method for recording at least either digital broadcast signal or analog broadcast signal, as being connected to a television receiver including a first selector for selecting either digital broadcast signal or analog broadcast signal, and sending to a monitor, an information output unit detecting which signal is selected by the first selector, a first input unit for issuing the detection result of the information output unit and digital broadcast signal, and an analog output terminal for issuing analog broadcast signal, comprising:
a step of connecting to the first input and output unit;
a step of connecting to the analog output terminal;
a step of acquiring the result of detection by the information output unit;
a step of selecting either digital broadcast signal or analog broadcast signal;
a step of for recording the signal selected at the selecting step in either digital system or analog system; and
a step of controlling for
   controlling the selecting step to select the digital broadcast signal and record at the recording step in digital system when the detection result of the information output unit acquired at the detection result acquiring step is the information showing selection of the digital broadcast signal, or
   controlling the selecting step to select the analog broadcast signal and record at the recording step in analog system when the detection result of the information output unit acquired at the detection result acquiring step is the information showing selection of the analog broadcast signal.

### BRIEF DESCRIPTION OF THE DRAWINGS

Fig. 1 is a block diagram showing a structure of information recording apparatus in preferred embodiment 1 of the invention.
Fig. 2 is a schematic diagram showing a structure of AVC command frame.
Fig. 3 is a schematic diagram showing a state of packet on bus.
Fig. 4 is a flowchart explaining operation of information recording apparatus in preferred embodiment 1 of the invention.
Fig. 5 is a sequence chart explaining the operation when establishing connection.
Fig. 6 is a schematic diagram showing a state of packet on bus.
Fig. 7 is a block diagram showing a structure of information recording apparatus in preferred embodiment 2 of the invention.
Fig. 8 is a flowchart explaining operation of information recording apparatus in preferred embodiment 2 of the invention.
Fig. 9 is a block diagram showing a structure of information recording apparatus in a prior art.

### DETAILED DESCRIPTION OF THE PREFERRED EMBODIMENTS

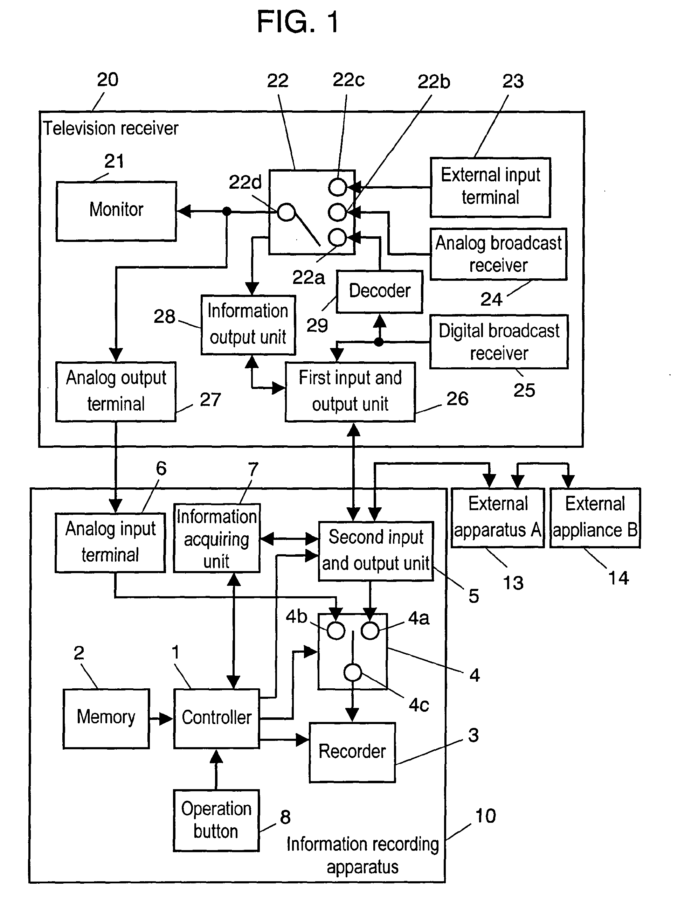

Preferred embodiments of the invention are described below while referring to Fig. 1 to Fig. 8.

### (Preferred embodiment 1)

Fig. 1 is a block diagram showing a structure of information recording apparatus in preferred embodiment 1 of the invention, a structure of a television receiver connected to this information recording apparatus, and a connection state of the information recording apparatus and external apparatuses.

In Fig. 1, external apparatus A 13, external apparatus B 14 are VTR or other electronic apparatuses, having the interface conforming to IEEE1394 standard. For example, the external apparatus A 13 includes a band register (not shown) and a channel register (not shown), and has a function as IRM (isochronous resource manager) for managing the bus communication band. The external apparatus B 14 has a function as cycle master for sending a synchronizing clock to the bus. The structure of the television receiver 20 is same as in Fig. 9, and its explanation is omitted.

Connection state of the information recording apparatus 10, television receiver 20, external apparatus A 13 and external apparatus B 14 is explained by referring to Fig. 1. Physically, the connection state of the apparatuses is a daisy-chain connection state between the television receiver 20 and information recording apparatus 10, the information recording apparatus 10 and external apparatus A 13, and the external apparatus A 13 and external apparatus B 14, respectively. Logically, the individual apparatuses are connected on the bus conforming to IEEE1394 standard. The apparatuses connected on the bus can mutually exchange data through the bus, and the data exchange system, that is, the communication system is either system selected from asynchronous communication and isochronous communication.

Asynchronous communication is not synchronous, but communication reliability free from packet loss is guaranteed, while real-time operation is guaranteed in isochronous communication. Therefore, control command between connected apparatuses is transmitted by asynchronous communication because transmission reliability is more important than real-time operation, while broadcast signals and other real-time signals are transmitted by isochronous communication.

The information recording apparatus in preferred embodiment 1 is described below.

The information recording apparatus 10 comprises a controller 1, a memory 2, a recorder 3, a second selector 4, a second input and output unit 5, an analog input terminal 6, an information acquiring unit 7, and an operation button 8.

The operation button 8 is pushed by the user to transmit a record start signal to the controller 1.

The memory 2 stores information about the television receiver 20 as connection destination (hereinafter called connection information) for establishing connection in the second input and output unit 5, and sends the connection information to the controller 1.

The controller 1 is composed of microcomputer and others having the following functions. A first function is to transmit a connection establishment command signal as control signal to the second input and output unit 5 when receiving a record start signal, and to transmit a command issue command signal as control signal to the information acquiring unit 7. A second function is to determine the input route of the signal to be recorded in the recorder 3 and the recording system of the recorder 3, on the basis of the signal showing the connect status response, and to issue a control signal to the second selector 4, second input and output unit 5, and recorder 3.

The recorder 3 is a recording unit of D-VHS or the like for recording the input signal from the second selector 4 in digital system when receiving a digital recording specifying signal as control signal from the controller 1, or in analog system when receiving an analog recording specifying signal.

The second selector 4 selects the digital broadcast signal from the second input and output unit 5, or analog broadcast signal from the analog input terminal 6, and issues to the recorder 3. The second selector 4 selects the digital broadcast signal when receiving a digital connection specifying signal as control signal from the controller 1, and the analog broadcast signal when receiving an analog connection specifying signal. The second selector 4 includes selection terminals 4a and 4b and a fixed terminal 4c.

The second input and output unit 5 composes a part of the interface conforming to IEEE1394 standard, and receives a digital broadcasts signal on the bus, and sends to the second selector 4 or information acquiring unit 7. When this second input and output unit 5 receives a connection establishment command signal as control signal from the controller 1, connection information is obtained from the controller 1, and on the basis of this connection information, connection with the first input and output unit 26 is established, thereby enabling digital communication with the television receiver 20. The analog input terminal 6 is an analog signal terminal for receiving an output of an analog broadcast signal from the analog output terminal 27, and sending to the second selector 4, and it is realized, for example, by composite terminal or S video terminal.

The information acquiring unit 7, when receiving a command issue command signal from the controller 1, transmits a connect status command through the interface composed of the second input and output unit 5 and first input and output unit 26, to an information output unit 28 of the television receiver 20. Further, the information acquiring unit 7 acquires a connect status response issued from the information output unit 28, and sends a signal corresponding to the connect status response to the controller 1.

Herein, the digital broadcast signal means a digital signal of video signal, audio signal, text data signal, or their combined signal, and the analog broadcast signal means an analog signal of video signal, audio signal, or their combined signal. The recorder 3 is not limited to the D-VHS, but includes any recording unit capable of recording video signal or other signal in digital system or analog system.

The connect status command issued from the information acquiring unit 7 and the connect status response issued from the information output unit 28 are AVC commands specified in IEEE1394 standard.

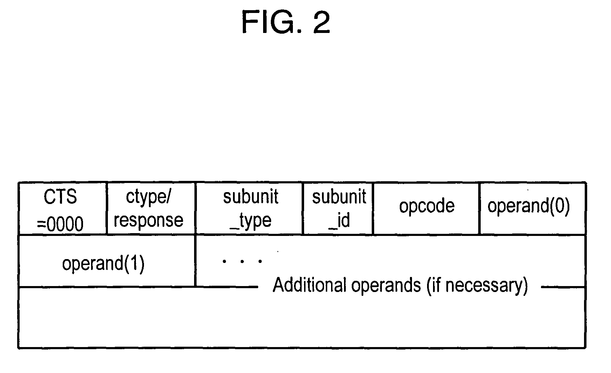

The AVC command is a control command exchanged between apparatuses connected on the bus, and is converted into a packet, and sent out onto the bus by asynchronous communication. The packet structure for composing this AVC command, that is, the AVC command frame is explained by referring to Fig. 2. At the same time, the connect status command and connect status response are described.

Fig. 2 is a schematic diagram of packet of AVC command. In Fig. 2, CTS refers to the command type. CTS = 0000 means that this CTS is set in 0000, showing it is an AVC command set. Ctype/response shows whether the packet is command or response, and the command function classification is shown in the case of command, and the command process result classification is shown in the case of response. Subunit_type and subunit_id show the address of subunit at the destination of transmission, and, for example, when transmitting AVC command to the monitor 21 of the television receiver 20 in preferred embodiment 1, an address showing the monitor 21 of the television receiver 20 is assigned. Opcode is a command operation, and operand shows additional information of command. At the destination of transmission, a command from the source of transmission is executed on the basis of opcode and operand. Therefore, the connect status command and connect status response are combined by combination of ctype/response, opcode and operand.

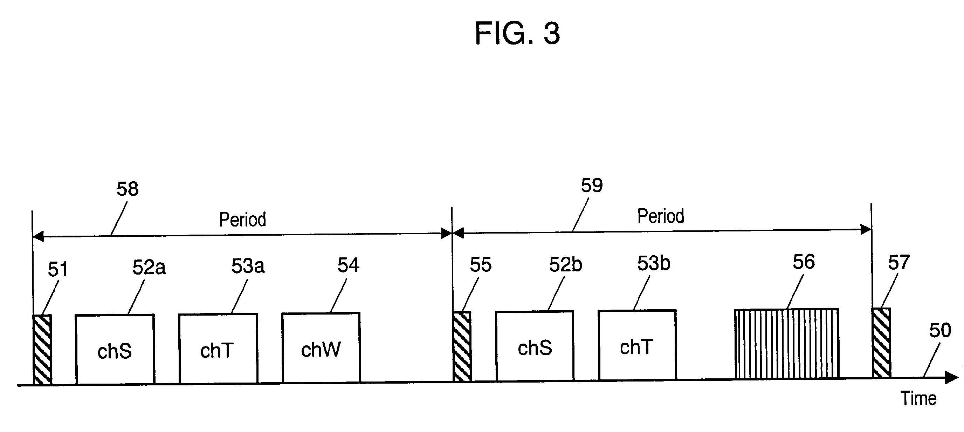

When the connect status command is sent out onto the bus, the packet state on the bus is explained by referring to Fig. 1 and Fig. 3. Fig. 3 is a schematic diagram showing communication cycle of data packet on the bus.

In Fig. 3, the axis of abscissas 50 denotes the time. Packets 51, 55, and 57 are cycle start packets for adjusting the timing on the bus, which are generated when the external apparatus B 14 as cycle master is broadcast on the bus. Output period of this cycle start packet is typically defined at 125 microseconds. Packets 52a and 52b are packets of isochronous communication issued by any one of the apparatuses connected on the bus to the bus by making use of the channel of chS. Similarly, packets 53a and 53b are packets of isochronous communication making use of the channel of chT, and packet 54 is a packet of isochronous communication making use of the channel of chW. Packet 56 is a packet of asynchronous communication as connect status command issued by the information acquiring unit 7 through the second input and output unit 5. Period 58 is duration defined by the packet 51, and period 59 is duration defined by the packet 55.

Operation at the time of output of each packet in Fig. 3 is explained. First, the external apparatus B 14 sends the packet 51 onto the bus, and one period of bus clock is started. Herein, after cycle start packet, that is, after output of the packet 51, the packet of isochronous communication is sent out prior to the packet of asynchronous communication, and further if there is an allowance in the band for transmission within the period 58, a packet of asynchronous communication can be sent out, as stipulated in IEEE1394 standard. The band is managed by the IRM, that is, the external apparatus A 13. After output of the packet 51, packets of isochronous communication, that is, packets 52a, 53a, 54 are sent out sequentially, and then the external apparatus A 13 checks if there is allowance or not in the communication band. The external apparatus A 13 judges that there is no allowance in the communication band in period 58, and controls so that AVC command may not be issued, thereby transferring to next period of period 59.

In next period 59, same as in period 58, the external apparatus B 14 sends the packet 55 onto the bus, and one period of bus clock is started, and then packets of isochronous communication, packets 52b and 53b are issued. When the output of the packet 54 of chW is completed in period 58, the external apparatus A 13 judges that there is an allowance in transmission band in period 59. By this judgement, output of packet of asynchronous communication is permitted, and the information acquiring unit 7 sends the packet 56 onto the bus. Later, the external apparatus B 14 sends the packet 57, and the period 59 is terminated.

In this manner, the AVC command of connect status command is sent onto the bus from the information acquiring unit 7. The connect status response described later is also sent onto the bus as packet of asynchronous communication by the same method as above.

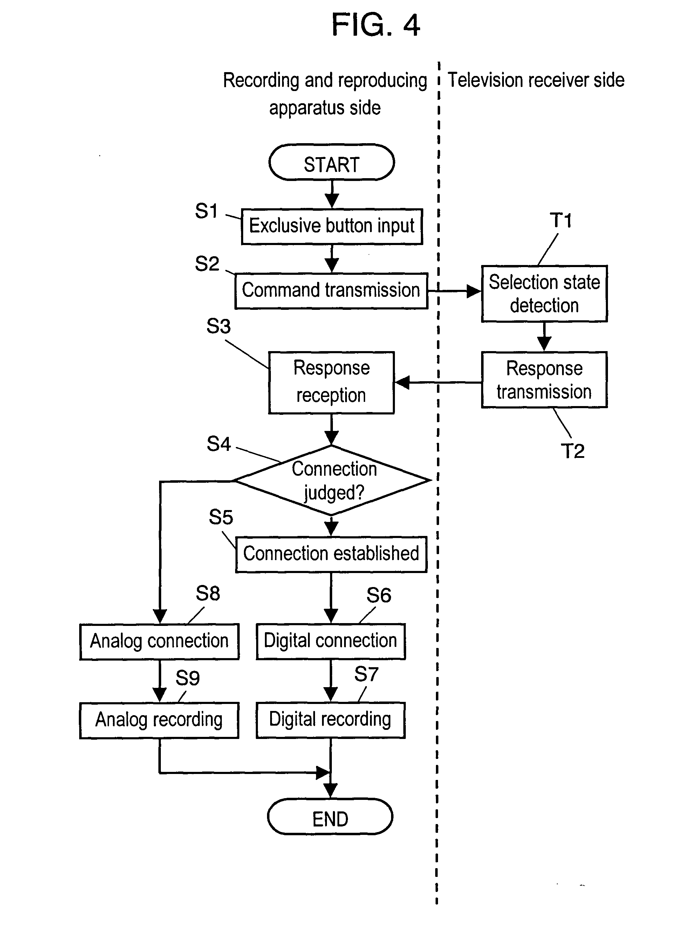

Operation of the information recording apparatus in preferred embodiment 1 of the invention is described below by referring to the flowchart in Fig. 4.

In Fig. 4, when the user pushes the operation button 8, a record start signal is transmitted from the operation button 8 to the controller 1 (step S1). As a result, the controller 1 transmits a command transmission signal to the information acquiring unit 7, and then the information acquiring unit 7 transmits a connect status command onto the bus by way of the second input and output unit 5 (step S2).

The connect status command is transmitted by specifying the information output unit 28 and sending the packet shown in Fig. 2 onto the bus. More specifically, in Fig. 2, the information acquiring unit 7 sets 0000 in CTS, sets 0001 as code showing status command in ctype/response, sets a subunit code showing the information output unit 28 in subunit_type and subunit_id, and sets the code telling that selection state of the first selector 22 is acquired by the information output unit 28 and returned to the information acquiring unit 7 in opcode, thereby sending the AVC command frame onto the bus.

The information output unit 28 receives the connect status command from the bus. By this reception, the information output unit 28 detects the output status from the first selector 22 to the monitor 21, that is, the selection state of the first selector 22 (step T1).

Consequently, the information output unit 28 creates a connect status response on the basis of the connection state of the first selector 22, and sends onto the bus (step T2). Herein, the connect status response has a format of AVC command frame shown in Fig. 2, and when the information output unit 28 can detect the selection state of the first selector 22, this connect status response is created. That is, the information output unit 28 sets 0000 meaning the AVC command set in the CTS, sets 1100 meaning that the status is stable, not in process of transition, in ctype/response, sets a code meaning the information output unit 28 in subunit_type and subunit_id, and sets a code meaning the selection state of the first selector 22 in opcode and operand. The created connect status response is issued as packet of asynchronous communication onto the bus same as the connect status command of packet 56 shown in Fig. 3.

Consequently, the information acquiring unit 7 acquires the connect status response on the bus by way of the second input and output unit 5, and transmits a signal corresponding to the connect status response to the controller 1 (step S3). That is, when the connect status response shows that the output of the external input terminal 23 or the output of the analog broadcast receiver 24 is selected by the first selector 22, the signal showing that the analog signal is issued by the monitor 21 is transmitted from the information acquiring unit 7 to the controller 1. When the connect status response shows that the output of the digital broadcast receiver 25 is selected by the first selector 22, the signal showing that the digital broadcast signal is issued by the monitor 21 is transmitted from the information acquiring unit 7 to the controller 1.

Next, when the controller 1 receives a signal corresponding to the connect status response, the input route from the television receiver 20 to the recorder 3 is determined on the basis of this connect status response, and to realize its input route, a control signal is issued to the second selector 4 and second input and output unit 5 (step 4).

Herein, the processing at step S4 is specifically described. The processing at step S4 varies with the content of the connect status response.

First, suppose the connect status response shows connection between the fixed terminal 22d and selection terminal 22a (hereinafter, the connect status response in this case is called digital connection response). In this case, the controller 1 acquires connection information from the memory 2. Consequently, the controller 1 transmits the connection information and connection establishment command signal to the second input and output unit 5, a digital connection specifying signal to the second selector 4, and digital record specifying signal to the recorder 3. As a result, the flow transfers from step S4 to step S5.

On the other hand, supposing the connect status response acquired from the information acquiring unit 7 shows connection between the fixed terminal 22d and selection terminal 22b or 22c (hereinafter, the connect status response in this case is called analog connection response), the controller 1 transmits an analog connection specifying signal to the second selector 4 and transmits an analog record specifying signal to the recorder 3. Thus, the flow transfers from step S4 to step S8.

When receiving the digital connection response, the controller 1 acquires connection information from the memory 2, and transmits connection establishment command signal and connection information to the second input and output unit 5, and on the basis of this connection information, the second input and output unit 5 establishes connection with the first input and output unit 26 (step S5).

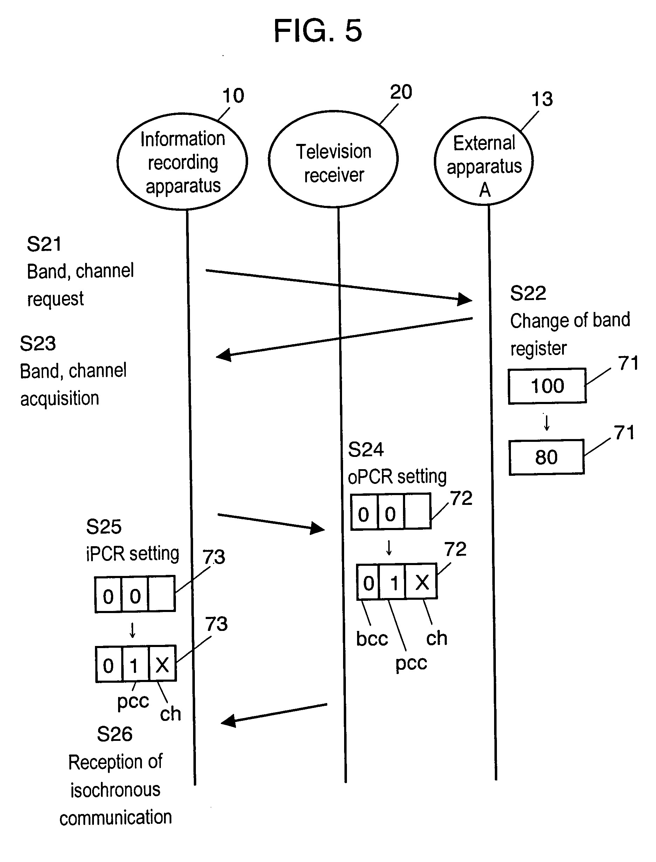

Herein, the operation of connection establishment at step S5 is explained specifically below by referring to Fig. 5 showing a sequence chart right after transfer from step S4 to step S5.

Fig. 5 shows the state of the information recording apparatus 10, television receiver 20, and external apparatus A 13 shown in Fig. 1.

Coming to step S5, the information recording apparatus 10 demands the band and channel to the IRM of external apparatus A 13 (step S21). This demand is made by transmitting an AVC command to the external apparatus A 13 from the information recording apparatus 10. In preferred embodiment 1 of the invention, suppose that 20 microseconds is demanded as the band. As a result, the external apparatus A 13 changes the value of a band register 71 lower by the demanded portion (step S22), and returns the response confirming keeping of the band for the information recording apparatus 10 to the information recording apparatus 10 as AVC command (step S23). The information recording apparatus 10 adds 1 to pcc (point-to-point connection counter) as a part of oPCR (output plug control register) 72 incorporated in the first input and output unit 26 (step S24), and sets channel X in ch (channel number). The information recording apparatus 10 sets iPCR (input plug control register) 73 incorporated in the own second input and output unit 5. More specifically, 1 is added to pcc of iPCR 73, and channel X is set in ch (step S25). By this operation, the band and channel are reserved, and reception of digital broadcast signal from the television receiver 20 to the information recording apparatus 10 is started (step S26).

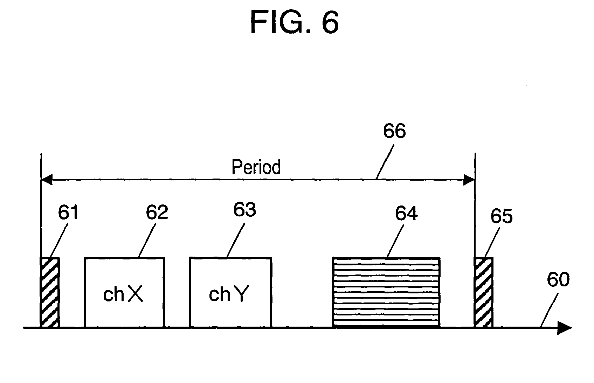

At this time, the digital broadcast signal issued from the television receiver 20 is converted into packet, and issued onto the bus as packet of isochronous communication. The state of the packet on the bus at the time of transmission of this digital broadcast signal is explained by referring to Fig. 6.

In Fig. 6, the axis of abscissas 60 is the time axis. Packets 61 and 65 are cycle start packets issued by the external apparatus B 14, and packet 62 is a packet of digital broadcast signal issued from the television receiver 20, which is issued by using channel X. This packet 62 is a packet of isochronous communication. Packet 63 is a packet of isochronous communication issued by using channel Y from any one of the apparatuses connected on the bus, and packet 64 is a packet of asynchronous communication issued from any one of the apparatuses connected on the bus.

Operation of output of each packet in Fig. 6 is explained. The external apparatus B 14 issues a packet 61, and the television receiver 20 forms a digital broadcast signal into a packet, and issues a packet 62 onto the bus. This packet 62 makes use of the channel X acquired as packet of isochronous communication from the external apparatus A 13. Next, a packet 63 is issued by making use of channel Y. After all packets of isochronous communication on the bus are issued, a packet 64 is issued as packet of asynchronous communication. In one period after generation of the packet 61, that is, in 125 microseconds, a packet 65 is issued and a period 66 is terminated. After the period 66 until the connection making use of channel X is canceled by the information recording apparatus 10, the digital broadcast signal is being issued on the bus. That is, by the same operation as in period 66, the packet of isochronous communication converted from the digital broadcast signal is continuously issued on the bus by making use of channel X. Hence, real-time transmission of digital broadcast is realized.

Since chX necessary for reception of digital broadcast is acquired by the information recording apparatus 10 demanding the channel to the external apparatus A 13, setting of chX can be canceled only by the information recording apparatus 10 according to the regulation of IEEE1394. In other words, by manipulating other apparatus than the information recording apparatus 10 on the bus, reception of digital broadcast signal of the information recording apparatus 10 will not be disturbed.

In this setting, from the television receiver 20 to the information recording apparatus 10, transmission of digital broadcast signal by isochronous communication using channel X can be started. When the second selector 4 receives a digital connection specifying signal, the second selector 4 connects between the fixed terminal 4c and selection terminal 4a (step S6).

When the recorder 3 receives a digital recording specifying signal, the recorder 3 receives a digital broadcast signal from the second selector 4, and starts recording in digital recording system (step S7).

On the other hand, when the second selector 4 receives an analog connection specifying signal, the second selector 4 connects between the fixed terminal 4c and selection terminal 4b (step S8). When the recorder 3 receives an analog recording specifying signal, the recorder 3 receives an analog broadcast signal from the second selector 4, and starts recording in analog recording system (step S9).

In the information recording apparatus 10 having such structure, operation is explained, by referring to Fig. 1 to Fig. 5, in the case of starting recording of analog broadcast signal or digital broadcast signal being seen by the user on the monitor 21, in the recorder 3.

While the user is seeing a digital broadcast on the monitor 21, if the user desires to start recording in the recorder 3 by manipulating the operation button 8, the operation is as follows. The digital broadcast signal selected by the digital broadcast receiver 25 is supplied into the decoder 29 by connecting between the fixed terminal 22d and selection terminal 22a of the first selector 22, and the analog signal from the decoder 29 is issued to the monitor 21 and recorded.

At step S1, the user manipulates the operation button 8. At step S2, the information acquiring unit 7 transmits a connect status command to the bus. That is, the information acquiring unit 7 sets 0000 in CTS in the AVC command frame shown in Fig. 2, sets 0001 or a code of status command in ctype/response, sets subunit code showing the monitor 21 in subunit_type and subunit_id, and sets a code showing acquisition of selection state of the first selector 22 by the information output unit 28 and return to the information acquiring unit 7 in opcode. The information acquiring unit 7 thus creates a connect status command, and issues this connect status command to the bus as packet 56 of asynchronous communication shown in Fig. 3.

At step T1, the information output unit 28 receives the connect status command, and acquires the selection state of the first selector 22, and creates a connect status response. That is, in the AVC command frame shown in Fig. 2, the information output unit 28 sets 0000 meaning an AVC command set in CTS, sets 1100 meaning a stable status, not in transition, in ctype/response, sets a code meaning the monitor 21 in subunit_type and subunit_id, and sets a code meaning a state of connection of fixed terminal 22d and selection terminal 22a of the first selector 22 in opcode and operand, and thus an AVC command frame is composed. The information output unit 28 converts this connect status response into a packet of asynchronous communication, and issues onto the bus same as in the case of the packet 56 shown in Fig. 3 (step T2). Herein, the connect status response shows the fixed terminal 22d and selection terminal 22a of the selector 22 are connected, and hence this connect status response is a digital connection response.

At step S3, the information acquiring unit 7 acquires a digital connection response from the bus, and transmits a signal corresponding to the digital connection response to the controller 1.

At step S4, the controller 1 transmits a digital connection specifying signal to the second selector 4, and a connection establishment command signal and connection signal to the second input and output unit 5, and further transmits a digital recording specifying signal to the recorder 3.

At step S5, the second input and output unit 5 establishes connection with the first input and output unit 26, and at step S6 the second selector 4 connects between the fixed terminal 4c and selection terminal 4a. Finally, at step S7, the digital broadcast signal entered from the second selector 4 is recorded in the recorder 3 in digital system.

In this operation, the user has only to manipulate the operation button 8, and then the digital broadcast signal of digital broadcast being seen can be recorded in the recorder 3 in digital system. That is, once the user manipulates the operation button 8, the route of digital broadcast being seen on the monitor 21 by way of the digital broadcast receiver 25, decoder 29, selection terminal 22a and fixed terminal 22d can be detected automatically. Thus, the route of the digital broadcast receiver 25, first input and output unit 26, second input and output unit 5, selection terminal 4a and fixed terminal 4c is automatically set up, and through this route the recorder 3 can record the digital broadcast being seen in digital system.

On the other hand, suppose the user is seeing an analog broadcast on the monitor 21, that is, while the monitor 21 is showing an analog broadcast signal being received in the analog broadcast receiver 24 by connecting between the fixed terminal 22d and selection terminal 22b of the first selector 22, if the user manipulates the operation button 8 to record the analog broadcast signal in the recorder 3, the operation is as follows.

At step S1, the user manipulates the operation button 8. At step S2, the information acquiring unit 7 transmits a connect status command to the bus. That is, the information acquiring unit 7 sets 0000 in CTS in the AVC command frame shown in Fig. 2, sets 0001 or a code of status command in ctype/response, sets subunit code showing the information output unit 28 in subunit_type and subunit_id, and sets a code showing acquisition of selection state of the first selector 22 by the information output unit 28 and return to the information acquiring unit 7 in opcode. The information acquiring unit 7 thus creates a connect status command, and issues this connect status command to the bus as packet 56 of asynchronous communication shown in Fig. 3.

At step T1, the information output unit 28 receives the connect status command, and acquires the selection state of the first selector 22, and creates a connect status response, and issues to the bus. That is, in the AVC command frame shown in Fig. 2, the information output unit 28 sets 0000 meaning an AVC command set in CTS, sets 1100 meaning a stable status, not in transition, in ctype/response, sets a code meaning the information output unit 28 in subunit_type and subunit_id, and sets a code meaning a state of connection of fixed terminal 22d and selection terminal 22b of the first selector 22 in opcode and operand. Thus, the information output unit 28 creates a connect status response. The information output unit 28 converts this connect status response into a packet of asynchronous communication, and issues onto the bus same as in the case of the packet 56 shown in Fig. 3. Herein, the connect status response shows the fixed terminal 22d and selection terminal 22b of the selector 22 are connected, and hence this connect status response is an analog connection response.

At step S3, the information acquiring unit 7 acquires an analog connection response from the bus as the output from the information output unit 28, and transmits a signal corresponding to the analog connection response to the controller 1.

At step S4, the controller 1 transmits an analog connection specifying signal to the second selector 4, and an analog recording specifying signal to the recorder 3. At step S8, the second selector 4 connects between the fixed terminal 4c and selection terminal 4b, and finally, at step S9, the analog broadcast signal entered from the second selector 4 is recorded in the recorder 3 in analog system.

In this operation, the user has only to manipulate the operation button 8, and then the analog broadcast signal of analog broadcast being seen can be recorded in the recorder 3 in analog system. That is, once the user manipulates the operation button 8, the route of analog broadcast being seen on the monitor 21 by way of the analog broadcast receiver 24, selection terminal 22b and fixed terminal 22d can be detected automatically. Thus, the route of the analog broadcast receiver 24, selection terminal 22b, fixed terminal 22d, analog output terminal 27, analog input terminal 6, selection terminal 4b, and fixed terminal 4c is automatically set up, and through this route the recorder 3 can record the analog broadcast being seen in analog system.

Thus, according to preferred embodiment 1 of the invention, on the basis of the connect status response acquired from the television receiver 20, the controller 1 controls the second selector 4 and second input and output unit 5. Thus, the video, audio, or data signal of broadcast being seen by the user on the monitor 21 of the television receiver 20 can be recorded in the recording system suited to the input interface of the signal, only by manipulation of the operation button 8 by the user. Further, since the user's manipulating procedure is simple, the user makes no error in manipulation during recording. That is, the video or other signal being seen in the television receiver 20 can be recorded by simple operation, and user's operation error can be prevented.

### (Preferred embodiment 2)

An information recording apparatus in preferred embodiment 2 of the invention differs from the information recording apparatus in preferred embodiment 1 only in the point that an encoder is further provided for digitizing an input analog broadcast signal in order to record always in digital system even if the input signal is an analog broadcast signal.

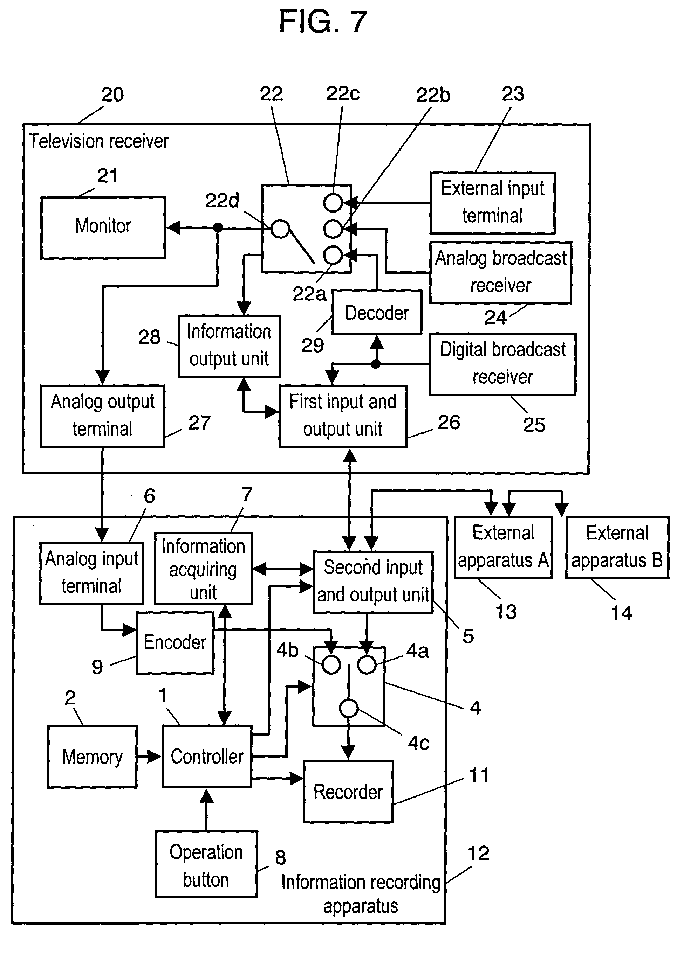

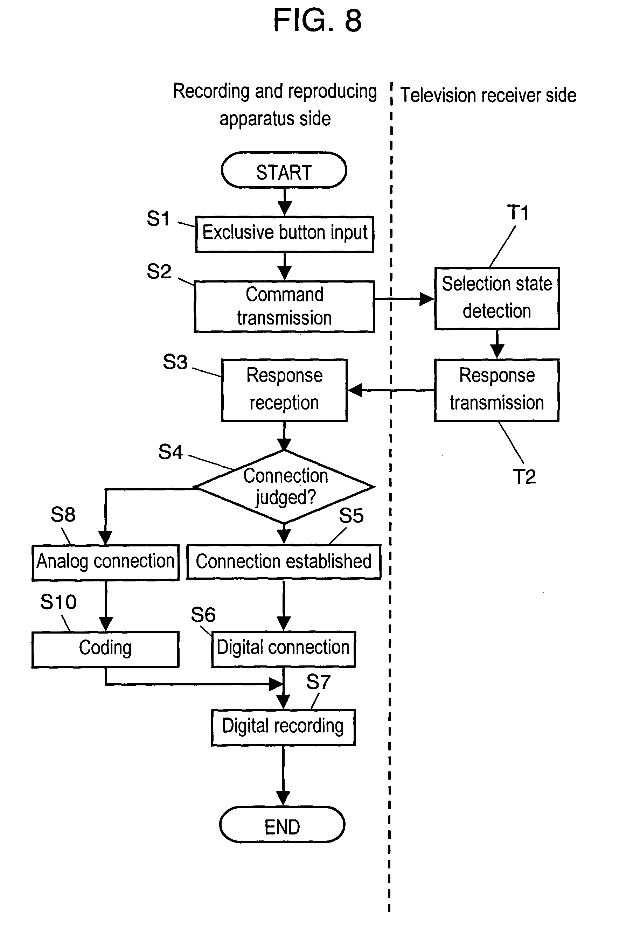

Referring mainly to this difference, the information recording apparatus in preferred embodiment 2 is explained in Fig. 7 and Fig. 8. In Fig. 7 and Fig. 8, same component elements as in preferred embodiment 1 are identified with same reference numerals, and the explanation is omitted.

Fig. 7 is a block diagram showing a structure of information recording apparatus 12 in preferred embodiment 2 of the invention, a structure of a television receiver 20 connected to this information recording apparatus 12, and a connection state of the information recording apparatus 12 and external apparatuses.

In Fig. 7, an encoder 9 is composed of circuits for digitizing an analog broadcast signal entered through an analog input terminal 6, and issuing to a second selector 4.

A recorder 11 records an input signal from the second selector 4 in a recording medium in digital system. For example, the recorder 11 is realized by digital VTR, hard disk drive, optical disk drive, and other digital recording means. Examples of optical disk drive include DVD-RAM drive, DVD-RW drive, etc.

Operation of the information recording apparatus in preferred embodiment 2 is explained by referring to a flowchart in Fig. 8. At step S8, analog connection is established, and at step S10 the encoder 9 digitizes the analog broadcast entered through the analog input terminal 6. The digitized signal is supplied into the recorder 11 by way of the second selector 4, and the process goes to next step S7.

In the information recording apparatus 12 having such constitution, while the user is seeing an analog broadcast on the monitor 21, the operation of recording this analog broadcast signal in the recorder 11 by user's manipulation of the operation button 8 is explained by referring to Fig. 7 and Fig. 8. That is, by connecting the fixed terminal 22d and selection terminal 22b of the first selector 22, while the analog broadcast signal received in the analog broadcast receiver 24 is displayed on the monitor 21, when the user manipulates the operation button 8 in order to record this analog broadcast signal in the recorder 11, the operation is as follows. Incidentally, while the user is receiving a digital broadcast on the monitor 21, when the user manipulates the operation button 8 in order to record this digital broadcast signal in the recorder 11, the operation is same as in the information recording apparatus in preferred embodiment 1, and this explanation is omitted.

At step S1, the user manipulates the operation button 8, and at step S2 the information acquiring unit 7 issues a connect status command onto the bus.

At step T1, the information output unit 28 receives the connect status command from the bus, acquires the connection state of the first selector 22, and creates a connect status response. The information output unit 28 forms this connect status response into a packet, same as packet 56 of asynchronous communication in Fig. 3, and transmits onto the bus. Herein, since the connect status response shows the connected state of the fixed terminal 22d and selection terminal 22b of the selector 22, this connect status response is an analog connection response.

At step S3, the information acquiring unit 7 acquires the analog connection response from the bus, and transmits a signal corresponding to the analog connection response to the controller 1. At step S4, the controller 1 transmits an analog connection specifying signal to the second selector 4.

At step S8, the second selector 4 connects between the fixed terminal 4c and selection terminal 4b, and at step S10 the analog broadcast signal entered through the analog input terminal 6 is converted into digital signal by the encoder 9, and is supplied into the second selector 4. Finally, at step S7, the signal entered from the second selector 4 is recorded in the recorder 11 in digital system.

Thus, according to preferred embodiment 2, in addition to the action and effect of preferred embodiment 1, by additionally installing the encoder 9, even if the recorder 11 is a hard disk drive or other digital recording unit, the analog broadcast signal entered through the analog input terminal 6 can be converted into digital signal and recorded.

The encoder 9 may also process by compressing when converting analog broadcast signal into digital signal.

As described herein, according to the information recording apparatus of the invention, when connected with a television set having a digital broadcast receiving function and a digital interface, by using a digital interface, the user can record the video or other signal being seen on the television receiver by a simple operation, without having to recognize the selection state of the signal entering the monitor. Another outstanding advantage of the information recording apparatus of the invention is that user's operation error can be prevented. Further, in the information recording apparatus of the invention, even if the recorder is a digital recording unit such as hard disk drive, the analog broadcast signal can be recorded by converting into digital signal.

### INDUSTRIAL APPLICABILITY

The information recording apparatus and information recording method of the invention are capable of recording video or other signal being seen on a television receiver by a simple operation, and also preventing user's operation error.

Further, in the information recording apparatus and information recording method of the invention, even if the recorder is a digital recording unit such as hard disk drive, the analog broadcast signal can be recorded by converting into digital signal.

## Claims

1. An information recording apparatus for recording at least either digital broadcast signal or analog broadcast signal, as being connected to a television receiver including a first selector for selecting either digital broadcast signal or analog broadcast signal, and sending to a monitor, an information output unit detecting which signal is selected by the first selector, a first input and output unit for issuing the detection result of the information output unit and digital broadcast signal, and an analog output terminal for issuing analog broadcast signal, comprising:
a second input and output unit connected to the first input and output unit;
an analog input terminal connected to the analog output terminal;
an information acquiring unit for acquiring the result of detection by the information output unit;
a second selector for selecting either digital broadcast signal or analog broadcast signal;
a recorder for recording the signal selected by said second selector in either digital system or analog system; and
a controller for
controlling the second selector to select the digital broadcast signal and record in the recorder in digital system when the detection result of the information output unit acquired by the information acquiring unit is the information showing selection of digital broadcast signal, or
controlling the second selector to select the analog broadcast signal and record in the recorder in analog system when the detection result of the information output unit acquired by the information acquiring unit is the information showing selection of analog broadcast signal.

2. The information recording apparatus of claim 1, further comprising:
an encoder for converting the analog broadcast signal entered through the analog input terminal into a digital signal,
wherein the second selector selects either the digital broadcast signal or digital signal; and
wherein the controller
controls the second selector to select the digital broadcast signal and record in the recorder in digital system when the detection result of the information output unit acquired by the information acquiring unit is the information showing selection of digital broadcast signal, or
controls the second selector to select the digital signal and record in the recorder in digital system when the detection result of the information output unit acquired by the information acquiring unit is the information showing selection of analog broadcast signal.

3. The information recording apparatus of claim 1 or 2, wherein the second input and output unit and information acquiring unit compose the interface specified in IEEE1394 standard.

4. An information recording method for recording at least either digital broadcast signal or analog broadcast signal, as being connected to a television receiver including a first selector for selecting either digital broadcast signal or analog broadcast signal, and sending to a monitor, an information output unit detecting which signal is selected by the first selector, a first input and output unit for issuing the detection result of the information output unit and digital broadcast signal, and an analog output terminal for issuing analog broadcast signal, comprising:
a step of connecting to the first input and output unit;
a step of connecting to the analog output terminal;
a step of acquiring the result of detection by the information output unit;
a step of selecting either digital broadcast signal or analog broadcast signal;
a step of for recording the signal selected at the selecting step in either digital system or analog system; and
a step of controlling for
controlling the selecting step to select the digital broadcast signal and record at the recording step in digital system when the detection result of the information output unit acquired at the detection result acquiring step is the information showing selection of the digital broadcast signal, or
controlling the selecting step to select the analog broadcast signal and record at the recording step in analog system when the detection result of the information output unit acquired at the detection result acquiring step is the information showing selection of the analog broadcast signal.

5. The information recording method of claim 4, further comprising:
a step of converting the analog broadcast signal entered through the analog output terminal into a digital signal,
wherein the selecting step selects either the digital broadcast signal or the digital signal; and
wherein the controlling step
controls the selecting step to select the digital broadcast signal and record in the recorder in digital system when the detection result of the information output unit acquired at the step of acquiring the detection result is the information showing selection of the digital broadcast signal, or
controls the selecting step to select the digital signal and record in the recorder in digital system when the detection result of the information output unit acquired at the step of acquiring the detection result is the information showing selection of the analog broadcast signal.
